(19) Europäisches Patentamt
European Patent Office
Office européen des brevets

(11) EP 0 388 877 B1

(12) **EUROPEAN PATENT SPECIFICATION**

(45) Date of publication and mention of the grant of the patent: **14.08.1996 Bulletin 1996/33**

(51) Int Cl.$^6$: **H04N 1/60**, G06T 7/40

(21) Application number: **90105206.8**

(22) Date of filing: **20.03.1990**

(54) **Color image processing apparatus provided with an image discrimination means**

Farbbildverarbeitungsgerät mit Bilddiskriminierungsmitteln

Appareil de traitement d'image couleur muni de moyens de discrimination d'image

(84) Designated Contracting States:
**GB**

(30) Priority: **22.03.1989 JP 69909/89**
**21.04.1989 JP 101967/89**
**28.04.1989 JP 109837/89**

(43) Date of publication of application:
**26.09.1990 Bulletin 1990/39**

(73) Proprietor: **KONICA CORPORATION**
**Tokyo 160 (JP)**

(72) Inventors:
- **Hiratsuka, Seiichiro**
  **Hachioji-shi, Tokyo (JP)**
- **Washio, Koji**
  **Hachioji-shi, Tokyo (JP)**
- **Matsunawa, Masahiko**
  **Hachioji-shi, Tokyo (JP)**

(74) Representative: **Türk, Gille, Hrabal, Leifert**
**Bruckneerstrasse 20**
**40593 Düsseldorf (DE)**

(56) References cited:
**EP-A- 0 251 278**
**EP-A- 0 270 090**
**EP-A- 0 326 429**
**US-A- 4 841 361**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 388 877 B1

## Description

The present invention relates to a color image processing apparatus and, more particularly, to an improved color image processing apparatus with excellent color reproduction.

In a conventional color image processing apparatus a color image is recorded on a recording paper in such a manner that a color image or a photograph or a text is optically read out by separating it into red R, green G, and blue B' that these colors are converted into recording colors such as yellow Y, cyan C, black K, that these colors are reproduced or corrected, and that the color image is recorded on the recording paper by electrophotographic color image processing equipment according to the converted colors.

Fig. 8 is a schematic illustration which shows how colors are discriminated by the above-described color image processing apparatus, wherein the apparatus discriminates between a chromatic color and an achromatic color. A cube in Fig. 8 illustrates color discrimination as follows. An axis indicated by arrow mark R represents the density of R, an axis indicated by arrow mark B represents the density of B, and an axis indicated by arrow mark G represents the density of G. Accordingly, the leftside down corner indicated by mark R,G,B DENSITY MINIMUM where the density of R, G, and B is zero, represents white, and the rightside up corner indicated by mark R,G,B DENSITY MAXIMUM, where the density of R, G, and B is maximum, represents black. For that reason, the region which links white with black in the cube represents an achromatic color (gray) and outside of this region represents chromatic colors.

Concerning the setting of the achromatic color region, there are reciprocal problems as follows.

(1) The achromatic color region is required to be as wide as possible so that color ghosting (unnecessary colors which appear at the edge of black letter images can be reduced, wherein the color ghosting is caused by shear of color and chromatic aberrations when black letters are processed.

(2) The achromatic color region is required to be as narrow as possible so that low chroma colors (for instance brown, dark blue, purple, and the like) can be precisely reproduced when a color gradation picture is processed.

Since these reciprocities exist, a compromise used to be made between Case (1) and Case (2) by setting the achromatic color region in such an extent that both cases are allowable.

In spite of that, colors of low chroma have been unsatisfactory when a color gradation picture is processed, since low chroma portions have been reproduced in black since the achromatic color region has a predetermined range as explained above.

On the other hand, even when a black letter is reproduced, the result is unsatisfactory as color ghosting appears.

In a color image processing apparatus it is known (EP-A-0 270 090) to obtain color image data in form of pixels from an original image by image reading means and to classify the color of each pixel of the original image into specific colors, i.e. into white, black, blue and red. The classified color of each pixels is corrected in view of the color pattern of neighbouring pixels so that color correction is only conducted when color ghost is observed in the color patters.

Furthermore, an image processing method an apparatus is known (EP-A-0 251 278) wherein an original image is processed into a plurality of color signals using color codes which after the color exstraction are subjected to a color ghost correction.

The present invention has been accomplished to solve the problems described above. Accordingly, it is the object of the present invention to provide a color image processing apparatus which can improve reproduction of low chroma of color gradation pictures and can reduce color ghosting of black letters. This object is solved in accordance with the present invention with a color image processing apparatus having the features of claim 1. Preferred improvements of this color image processing apparatus are subject matter of the dependent claims.

The color image processing apparatus of the present invention processes a color image by separating the read-out-color signals into chromatic color and achromatic color and comprises a color discriminating means to discriminate the kind of images according to the color-read-out-signals, wherein the chromatic color region and the achromatic color region can be changed according to the results of color discrimination by the color discriminating means.

The color image processing apparatus is composed in such a manner that the classifying criterion to separate a chromatic color from an achromatic color is changed according to the mode set from the outside of the apparatus, and the image processing conducted in the chromatic color region is different from that conducted in the achromatic color region.

Furthermore, the color image processing apparatus generates the color codes to discriminate between a chromatic color pixel and an achromatic color pixel in a document, and conducts image processing including color ghosting correction by using the color codes, is composed in such a manner that the apparatus generates the color codes of a chromatic color, an achromatic color, and an intermediate color which belongs to the intermediate region between a chromatic color and an achromatic color, and the apparatus changes the intermediate color code into the chromatic or the achromatic color code when color ghosting correction is conducted.

The chromatic color region and the achromatic color region can be changed according to the results of color image discrimination by the color processing apparatus of the present invention.

Furthermore, in the color image processing apparatus of the present invention, the classifying criterion of a chromatic color and an achromatic color are changed according to the mode set from the outside of the apparatus, and the image processing conducted in the chromatic color region is different from that conducted in the achromatic color region.

In the color image processing apparatus of the present invention, the color codes of a chromatic color, an achromatic color, and an intermediate color are changed into the color codes of a chromatic color or an achromatic color when color ghosting is conducted.

In the drawings, an example of the present invention will be described in detail as follows, wherein

Fig. 1 is a block diagram which illustrates one of the examples of the present invention,
Fig. 2 is a schematic illustration which shows color code generation,
Fig. 3 is a schematic illustration which explains image discrimination,
Fig. 4 is a schematic diagram which illustrates the image discrimination system,
Fig. 5-A, Fig. 5-B, and Fig. 5-C are schematic illustrations which show the color separation process,
Fig. 6 is a characteristic chart which shows the relation between the density gradient and image discrimination,
Fig. 7 is a schematic illustration which shows the whole structure of an electrostatic color copier,
Fig. 8 is a schematic illustration which shows conventional color code generation,
Fig. 9 is a block diagram which illustrates the composition of a second example of the present invention,
Fig. 10 is a schematic illustration of a color copier to which the second example of the invention can be preferably applied,
Fig. 11 is a block diagram which illustrates the composition of a third example of the present invention,
Fig. 12 is a table to explain the patterns of color codes,
Fig. 13 is a table which shows the relation between the pattern sizes to correct color ghosting and the number of the patterns, and
Fig. 14 is a block diagram which shows the general composition of the color ghost correction part.

In Fig. 1, the numeral 1 is a density conversion part which converts 8-bit digital data of R, G, and B given from outside, to 6-bit digital data of R, 6-bit digital data of G, and 5-bit digital data of B. The numeral 2 is a color code generating part which; receives the R, G, and B data from the density conversion part 1; discriminates white, black, chromatic colors, and intermediate colors; and outputs color codes. The numeral 3 is a color reproduction part which generates data of Y, M, C, and K after receiving data of R, G, and B, wherein the data is processed to reproduce colors. The numeral 4 is an image discrimination part which receives 8-bit data of G and discriminates between a black lettered text image and a color gradation picture image according to the density gradient of 8-bit data of G. The numeral 5 is a color code correction part which receives data from the image discrimination part 4 and classifies an intermediate color code into chromatic code and achromatic code. The numeral 6 is a selector which selectively passes the density data of Y, M, C, and K sent from the color reproduction part 3 according to the corrected color codes sent from the color code correction part 5. The numeral 7 is a color ghosting correction part which corrects color ghosting. The numeral 8 is a filtering part which filters color codes. The numeral 9 is a gradation correction part which corrects the gradation characteristics.

The operation of the apparatus of this example will be explained as follows, after which the principal portion of the present invention will be described.

A document image is read out by an image reader which is not illustrated in the drawings and the read-out data is converted into 8-bit digital data of R, G, and B. The digital data of R, G, and B is supplied to the density conversion part 1. At the density conversion part 1, the 8-bit data is converted into 6-bit data of R, 6-bit data of G, and 5-bit data of B in accordance with the visual characteristics of a human being. The data of R, G, and B outputted from the density conversion part 1 is imposed on the color code generating part 2 and the color reproduction part 3. The color code generating part 2 outputs the color codes which indicate which colors of white, black, chromatic or achromatic colors, and intermediate colors each pixel belongs to, according to the level of the data of R, G, and B.

Fig. 2 is a schematic illustration which shows how color codes are generated in the color code generation part 2. In the cube illustrated in Fig. 2, the axis indicated by the arrow mark R represents the density of R. The axis indicated by the arrow mark B represents the density of B. The axis indicated by the arrow mark G represents the density of G. Accordingly, a leftside front down corner of the cube indicated by the arrow mark R,G,B DENSITY MINIMUM represents white, wherein the density of R, G, and B is zero at the corner. (color code of white ; 00) A corner indicated by the arrow mark R,G,B DENSITY MAXIMUM represents black, wherein the density of R, G, and B is maximum at the rightside back up corner. The achromatic color region which links white with black is set up in such a manner that the region is narrow. (color code of the achromatic color region ; 11) The intermediate color region which is relatively wide is set up. (color code of the intermediate color region ; 01) The region other than the achromatic color region and the intermediate color region is defined as the chromatic color region. (color code of the chromatic color region ; 10) To go into more detail, only the region the color of which is always an achromatic color (black) in both cases of a black lettered text and a color gradation drawing, is defined as the black region. The region in which the color is low chroma in the case of a color gradation drawing and there is a possibility of color ghosting in the case of a black lettered text, is defined as the intermediate color region.

Accordingly, the color code generating part 2 outputs 2-bit color codes described above. (2-bit color codes of white ; 00, black ; 11, intermediate colors ; 01, chromatic colors ; 10)

These color codes are supplied to the color code correction part 5. At the color code correction part 5, the intermediate color code (01) is corrected to black color code (11) or a chromatic color code (10) according to a discriminating signal generated by the image discrimination part 4, wherein the discriminating signal is a signal to discriminate between a color gradation picture and a black lettered text. When a color gradation picture is processed, the intermediate color code is corrected to the chromatic color code so as to increase reproducibility of the colors of low chroma. When a black lettered text is processed, the intermediate color code is corrected to the black color code so as to prevent color ghosting from appearing.

Fig. 3 is a schematic illustration which shows how images are discriminated. In Fig. 3, X is the target pixel of an image to be discriminated. V is the pixel on a scanning line above the line on which the target pixel is placed. W is the pixel ahead of the target pixel. Y is the pixel behind the target pixel. Z is the pixel on the scanning line below the target pixel.

The density gradient will be found utilizing the density data (8-bit) of each pixel. Density gradient S of the target pixel X can be found by the following expression.

$$S = |V-X| + |W-Y| \quad (1)$$

Parameter S for the density gradient of the pixel X, using the density data of the peripheral pixels, can be found in this way.

The following parameters S' and S'' can also be considered.

$$S' = |V-X| + |W-X| \quad (2)$$

$$S'' = |V-Z| + |W-Y| \quad (3)$$

However, in the expression (2), only two peripheral pixels are used. Therefore, S′ has a disadvantage in that the discriminating ability is not sufficient. In the expression (3), it is necessary to use three pixels in the sub-scanning direction. Consequently, S″ has a disadvantage in that larger image memory capacity is needed. In conclusion, S in the expression (1) is adopted because it has a high discriminating ability, wherein a memory with small capacity is used.

Fig. 4 is a schematic block diagram which illustrates the details of the image discrimination part 4. In Fig. 4, the numeral 11 is a register which stores the data of pixel Y. The numeral 12 is a register which stores the data of pixel X. The numeral 13 is a register which stores the data of pixel W. The numeral 14 is a subtracting and absolute value calculating circuit in which W is subtracted by Y and an absolute value ( $|W - Y|$) is calculated. The numeral 15 is a line memory. The numeral 16 is a register which stores the data of pixel V. The numeral 17 is a subtracting and absolute value calculating circuit in which V is subtracted by X and an absolute value ( $|V - X|$) is calculated. The numeral 18 is an addition circuit in which the output from the subtracting and absolute value calculating circuit 14 and that of the circuit 17 are added ( $|W - Y| + |V - X|$). The numeral 19 is a threshold value generating circuit in which the threshold value of the density gradient is generated. The numeral 20 is a comparative circuit in which the image discriminating signal is generated by comparing the added output of the addition circuit 18 with the threshold value.

Image discrimination will be explained below from the viewpoint of colors. In L* a* b* uniform color space defined by CIE, the color codes of black, intermediate colors, and colors are set up in the color regions on the chromaticity phase of a* b* as illustrated in Fig. 5-A. The regions of the color codes are determined according to the value Q defined by the following equation, and the readout levels (8-bit; 0 to 255) of R, G, and B.

$$Q = \frac{\sqrt{0.75(R-W)^2 + 1.5(G-W)^2 + 0.75(B-W)^2}}{\sqrt{W_2 \times W_0}}$$

$$W_2 = (R + 2G + B) / 5$$

$$W_0 = 255$$

in the condition of:

(1) $Q \leqq 15$ and $G > 180$
Color code : 00 (white)

(2) $Q \leqq 7.5$ and $G \leqq 180$
Color code : 11 (black)

(3) $7.5 \leqq Q \leqq 15$ and $G \leqq 180$ Color code : 01 (intermediate colors)

(4) $Q > 15$
Color code : 10 (colors)

Parameter S is found by the image discrimination part 4 as described above and the value S is compared with the threshold value T. In the case of $S > T$, the image discrimination part 4 determines that the image is black lettered text and the intermediate region is defined as the black region as illustrated in Fig. 5-b. In the case of $S \leqq T$, the image discrimination part 4 determines that the image is a color gradation picture and the intermediate region is defined as the chromatic region as illustrated in Fig. 5-C.

Fig. 6 is a graph showing a cumulative distribution of the intermediate color code which was found from a histogram of parameter S of the density gradient of the intermediate colors. In the graph, the curve indicated by COLOR GRADATION DRAWING shows the ratio of the chromatic color code and the curve indicated by BLACK COLOR LETTER shows the ratio of the black code. The discriminating ratios become equal at the point where two curves intersect on the graph. In this case, the threshold value is 51 and the discriminating ratio is 82.4%. Accordingly, the threshold value is set to 51 and image discrimination is conducted discriminating between a color gradation drawing and a black letter text.

After the color codes are corrected as described above, the data of Y, M, C, and K passes through the selector 6 according to the corrected color codes and the scanning codes (the code of the color which is printed by the printer). In other words, when the corrected color represents a chromatic color (10). the data of Y, M, and C from the color reproduction part 3 passes through the selector 6. When the corrected color code represents black, the data of K from the color reproduction part 3 passes through the selector 6.

After the color ghosting correction, filtering, and the gradation correction are conducted, the data is outputted. The data is supplied to the printer installed outside the color processing apparatus and the color image is formed on a recording paper.

As described above, in the present invention, the color codes are separated into the codes which represent a chromatic color, black, white and an intermediate color, and the color code of an intermediate color is separated into black or a chromatic color according to the results of the image discrimination. Therefore, the intermediate color region becomes the black region in the case of a black letter text. Accordingly, the color ghosting never occurs. In the case of a color gradation drawing, the intermediate region becomes the chromatic color region. As a result, the low chroma colors can be finely reproduced.

Referring to Fig. 7, the structure and operation of a color copier to which the image processing apparatus of the present invention can be applied, will be explained as follows. The dry color development system is adopted in the color copier. The two component noncontact reversal development system is adopted in this example. In other words, the conventional transfer drum is not used in the example, but the color images are superimposed on the photoreceptor drum which is used to form an image in the electrostatic copier. In this example, in order to accomplish the object of making the apparatus compact, a four-color image of yellow, magenta, cyan, and black is developed while the photoreceptor drum is rotated 4 full turns, and after development the image is transferred to a plain recording paper by rotating the drum one full turn.

When the copy button of the color copier is pressed, the image reading unit A is driven, and the document 101 on the platen glass 128 is optically scanned by the optical system.

This optical system is composed of the carriage 132 on which the light sources 129, 130 of the halogen lamps and the reflection mirror 131 are mounted and of the movable mirror unit 134 on which mirrors 133, 133′ are mounted in V shape.

The carriage 132 and the movable unit 134 are moved on the slide rail 136 in steady speed and direction by the stepping motor 135.

The optical information (the image information) obtained by illuminating the document 101 with the light sources 129, 130, is sent to the optical information conversion unit 137 through the reflection mirror 131 and the mirrors 133, 133′.

As illustrated in Fig. 7, the standard white plate 138 is provided to the far left side of the back surface of the platen glass 128. The document reading unit A can be normalized by the white signal obtained by optical scanning of the standard white plate 138.

The optical information conversion unit 137 is composed of the lens 139, the prism 140, the two dichroic mirrors 102, 103, CCD 104 by which a color separated image of red can be taken, CCD 105 by which a color separated image of green can be taken, and CCD 106 by which a color separated image of blue can be taken.

The optical signal obtained by the optical system is converged by the lens 139 and separated into blue optical information and yellow optical information by the dichroic mirror 102 provided in the prism 140. Furthermore, the yellow optical information is separated into red optical information and green optical information by the dichroic mirror 103. In the way described above, the optical color image is separated by the prism 140 into the optical color information of red R, green G, and blue B.

Each color separated image is formed on the light receiving surface of each CCD. The image signal converted into the electrical signal is obtained in this way. After the image signal has been processed in the signal processing system, each color signal is outputted to the image writing unit B.

The signal processing system includes various signal processing circuits, like the density conversion part 1 or the gradation correction part 9 shown in Fig. 1, and an A/D converter.

Image writing unit B has the deflection unit 141. The deflection unit composed of the deflector in which the galvanomirror, the rotary polygon mirror, and a light deflection element like crystal are used, can be used as the deflection unit 141. Deflection scanning is conducted by the deflection unit 141 with the laser beam which is modulated by the color signal.

When the deflection scanning is started, the beam is detected by the laser beam index sensor (not illustrated in the drawing), beam modulation by the first color signal (the yellow signal, for instance) is started. The modulated beam scans the surface of the photoreceptor 142 which is uniformly charged by the electrical charger 154.

The electrostatic latent image corresponding to the first color signal is formed on the photoreceptor 142 by the main scanning conducted by the laser beam and the sub-scanning conducted by the rotation of the photoreceptor 142.

This electrostatic latent image is developed by the developing unit 143 in which yellow toner is contained and the yellow toner image is formed on the photoreceptor. The predetermined developing bias voltage is impressed on the developing unit 143 by a high voltage power source.

When toner supply is necessary, toner is supplied to the developing unit 143 by the toner supply means (not shown in the drawing) controlled by the direction signal sent from CPU (not shown in the drawing) which controls the system. The cleaning blade 147a does not come into contact with the photoreceptor surface, when the photoreceptor having the above-described toner image on it is rotated. The electrostatic latent image of the second color signal (for instance, the magenta signal) is formed in the same way as the first color signal. The second electrostatic latent image is developed to the magenta toner image by the developing unit 144.

A predetermined developing bias voltage is impressed on the developing unit 144 by a high voltage power source.

The electrostatic latent image is formed according to the third color signal (the cyan signal) in the same way. The latent image is developed to a cyan toner image by the developing unit 145 in which the cyan toner is contained. The electrostatic latent image is formed by the fourth color signal (the black signal) and developed by the developing unit 146 in which the black toner is contained in the same way as described above.

Consequently, a multicolor toner image is formed on the surface of the photoreceptor 142 as several color images are superimposed.

Four color toner image formation has been explained above. Of course, a single color toner image or a two color toner image can be formed in the same way.

As for the developing process, an example of the two component noncontact developing process has been explained above, wherein in the two component noncontact developing process, A.C or D.C bias voltage is impressed on the developing units and each toner is transferred to the photoreceptor surface 142.

The predetermined amount of toner is supplied to the developing units 144, 145, 146 according to the direction signal from CPU.

Recording paper P which is delivered from the paper feeding unit 148 through the feeding roller 149 and the timing roller 150, is conveyed to the surface of the photoreceptor 142 in synchronization with the rotation of the photoreceptor 142. Then, the multicolor toner image is transferred onto recording paper P by the transfer electrode 151 on which high voltage is impressed by a high voltage power source. After the image has been transferred, recording paper P is separated from the photoreceptor by the separation electrode 152. After recording paper P has been separated from the photoreceptor, it is conveyed to the fixing unit 153 to be fixed and a fixed color image is obtained.

After the color image has been transferred to recording paper P, the photoreceptor 142 is cleaned by the cleaning unit 147 to be prepared for the next image forming process.

In the cleaning unit 147, the predetermined D.C current voltage is impressed on the metal roll 147b so that the residual toner which was scraped off by the cleaning blade 147a from the surface of the photoreceptor 142 can be easily collected. The metal roll 147b is placed around the surface of the photoreceptor 142 not to contact with the surface. While the surface of the photoreceptor is being cleaned, the cleaning blade 147a is pressed against the photoreceptor surface. After cleaning, the cleaning blade is removed from the surface. The auxiliary roller 147c is provided to the photoreceptor 142 in order to remove the unnecessary toner left on the photoreceptor surface when the cleaning blade 147a is removed. Since this auxiliary roller 147c is rotated in the opposite direction to the photoreceptor 142 and pressed against the photoreceptor, the unnecessary toner is completely removed from the photoreceptor surface.

In the example mentioned above, the color image processing apparatus of the present invention is applied to the color copier. Needless to say, the color image processing apparatus of the present invention can be applied to other kinds of apparatus.

In the present invention, when colors are separated into a chromatic color and an achromatic color, the intermediate region is set up and the intermediate region is separated into a chromatic color and an achromatic color according to the kind of the image. As a result, the color image processing apparatus can be realized in which reproduction of low chroma colors can be improved in a color gradation picture and the color ghosting can be eliminated from the black lettered text.

Fig. 9 is a block diagram which illustrates the composition of another example of the present invention.

The composition illustrated in Fig. 9 is basically the same as that illustrated in Fig. 1. In Fig. 9, the signal outputted from the image discrimination part 4 is inputted not only to the color code correction part 5 but also to the filtering part 8 and the gradation correction part 9.

In the image discrimination part 4, selection is made from a letter text mode to process a letter text and a color gradation picture mode to process a color gradation picture. In other words, the mode is set in the image discrimination part 4. Mode selection conducted in the image discrimination part 4 is set from the outside of the apparatus, for instance from the operation unit.

In the color code correction part 5, the color code (01) of an intermediate color is corrected to the color code (11) of black or the color code (10) of a chromatic color in accordance with the image processing mode setting signal which is generated in the image discrimination part 4, wherein the image processing mode setting signal is the signal used to select either the color gradation picture mode or the letter text mode. In other words, when a color gradation picture is processed, the color code of an intermediate color is corrected to the color code of a chromatic color so that the reproducibility of low chroma colors can be improved. When a black letter text is processed, the color code of an intermediate color is corrected to the color code of black so that the occurrence of color ghosting can be prevented.

In the filtering part 8 and the gradation correction part 9, processing is conducted according to the mode setting signal. In the filtering part, MTF correction and smoothing processing are conducted.

MTF correction corrects the resolution when it is lowered due to various causes. Accordingly, it is preferable that the amount of MTF correction is changed according to the mode, wherein the mode is the letter text mode or the color gradation picture mode. For example, when the letter text mode is selected, the amount of correction is set large, and when the photographic mode is selected, a small amount of correction is set necessary. In order to change the amount of correction, a convolution filter may be adopted which uses the pixel data of N x N (N = 3, 5, or 7) pixels and the coefficient of the filter may be modified. In other words, when a letter text is processed, the convolution filter is used as a high pass filter, and when a color gradation picture is processed, the convolution filter is used as a low filter. When a color gradation picture is processed, smoothing processing is conducted in order to reduce the moire effect.

When a gradation picture is processed in the gradation correction part 9, the gradation ($\gamma$) is lowered in order to obtain gradation characteristics which have a smooth characteristic curve. When a letter text is processed, the gradation ($\gamma$) is set to a higher value in order to obtain a sharp image.

After processing, the image signal is supplied to a printer unit placed outside the apparatus to form an image on a recording paper.

As described above. in the example of the present invention, the color codes are separated into the color codes of a chromatic color, black, white, and an intermediate color and image processing is modified according to the mode. Accordingly, the intermediate color region in a black letter text is changed to a black region. As a result, color ghosting does not occur and a sharp image can be obtained since the resolution is improved. In the case of a color gradation picture, the intermediate color region is changed to a chromatic color region. As a result, a chromatic color of low chroma can be excellently reproduced and an image with superior in gradation reproducibility can be obtained.

Referring to Fig. 10, the structure and motion of a color copier of the present invention will be described as follows. The color copier illustrated in Fig. 10 has the same structure as that illustrated in Fig. 7, and the dry color developing system is adopted to the color copier.

In this example, image processing is modified according to the kind of image. Accordingly, a color image processing apparatus can be realized which is characterized in that; the reproducibility of a color of low chroma is improved in a color gradation picture so that the gradation characteristics are superior; the resolution is improved when a letter text is processed; and the occurrence of color ghosting can be reduced.

The third example of the present invention will be explained in detail.

Fig. 11 is a block diagram which illustrates the composition of the example of the invention. In Fig. 11, the numeral 1 is a density conversion part which converts the 8-bit digital data of R, G, and B given from the outside of the apparatus into respective 6-bit, 6-bit, and 5-bit digital data. The numeral 2 is a color code generating part which receives the data of R, G, and B from the density conversion part 1, discriminates white, black, a chromatic color and an intermediate color, and outputs color codes. The numeral 3 is a color reproduction part which generates the data of Y, M, C and K after receiving the data of R, G and B. The numeral 6 is a selector which selectively passes the density data of Y, M, C and K sent from the color reproduction part 3 according to the scanning code which is not shown in the drawing. The numeral 7 is a color ghost correction part in which color ghosting is corrected and the color code is modified. The numeral 9 is a gate which selectively passes the density data according to the color code. The numeral 8 is a filtering part in which various filtering processing is conducted. The numeral 10 is an enlarging/reducing part in which image enlargement and reduction are conducted. The numeral 11 is a printer unit by which images are recorded.

The motion of the apparatus of this example will be explained as follows.

A document image is read out in the image reading part which is not shown in the drawing and converted into the 8-bit digital data of R, G and B. The digital data of R, G and B is supplied to the density conversion part 1. In the density conversion part 1, the 8-bit digital data is converted into 6-bit, 6-bit, and 5-bit digital data in accordance with human visual characteristics. The data of R, G and B outputted from the density conversion part 1 is given to the color code generating part 2 and the color reproduction part 3. In the color code generating part 2, the color code is outputted according to the levels of the data of R, G and B, wherein the color code indicates to which color each pixel belongs out of white, black, an achromatic color and an intermediate color. Color code generation in the color code generating part 2 is illustrated in Fig. 2.

Accordingly, the color code generating part 2 outputs 2-bit color codes (white; 00, black; 11, an intermediate color; 01, and a chromatic color; 10).

These color codes are supplied to the color ghost correction part 7. In the color ghost correction part 7, the color code (01) of an intermediate color is modified to either the color code (11) of black or the color code (10) of a chromatic color according to the color pattern. When a color gradation picture is processed, the color code of an intermediate color is modified to the color code of a chromatic color in order to improve the reproducibility of a color of low chroma. When a black letter text is processed which has color ghosting, the color code of an intermediate color is modified to the color code of black in order to prevent the occurrence of color ghosting.

Color ghost correction conducted in the color ghost correction part 7 will be explained as follows. First of all, color ghosting is eliminated by the color pattern method. The reason why the color pattern method has been adopted, is that the color of the color ghosting corresponds to an original color, for example chromatic color ghosting corresponds to original black. When the color pattern method is adopted in order to determine the target pixel, the original color can be discriminated by checking on the combination (the pattern) of the target pixel and its peripheral pixels. An example is shown in Fig. 12. In Fig. 12, the target pixel, the color pattern of the peripheral pixels, and the modified target pixel are shown.

In the first color pattern example in Fig. 12, a target pixel has white pixels to one side, and to the other side a single chromatic pixel and two black pixels. From this, it can be considered that the intermediate color, which is the target pixel, is color ghosting which often appears at the edge of black. Accordingly, the target pixel is modified to black in this example.

On the other hand, in the second color pattern example in Fig. 12, it can be considered that the target pixel is not color ghosting but part of a color gradation picture. Accordingly, the target pixel is modified to a chromatic color.

It is difficult to conduct the above-described processing by a computing circuit. Therefore, the color pattern is arranged in the form of a LUT (Lookup-Table) and is stored in ROM so that the above-described processing can be conducted easily. There are two systems in the color pattern. One is one dimensional system and the other is two dimensional. When the number of colors is identified as N and the number of the peripheral pixels including the target pixel is identified as M, the number of the color patterns can be described as follows.

$N^M$ Accordingly, it is possible to use the two dimensional color pattern. However, the number M suddenly increases in this case. In other words, when the two dimensional color pattern is adopted, the number of peripheral pixels of each dimensional direction (the main scanning direction/the sub-scanning direction) is not so high. However, the number of color patterns is increased.

The relation between the pattern size and the number of the color patterns is shown in Fig. 13.

In this example, a one dimensional color pattern of the size 1 x 7 (N = 4, M = 7) is used and color ghosting is eliminated independently in the main scanning direction and the sub-scanning direction. In this case, there is no difference between the occurrence of color ghosting in the main scanning direction and that in the sub-scanning direction. Therefore, the same color pattern is used in both the main scanning direction and the sub-scanning direction.

In this case, the color pattern of the size 1 x 7 is selected. It is possible to use a smaller size color pattern such as the color pattern of the size 1 x 5 if the color ghosting is not so remarkable. The color ghosting of one pixel can be eliminated by the color pattern of the size 1 x 5, and the color ghosting of two pixels can be eliminated by the color pattern of the size 1 x 7.

When the color pattern of the size 1 x 7 is used, the number of the color patterns is $4^7 = 16384$. In the present invention, the color code is inputted to ROM to be used as the address of ROM.

The color pattern shown as the example is as follows.

| | | | | | | |
|---|---|---|---|---|---|---|
| white | white | white | an intermediate color | a chromatic color | black | black |
| (peripheral pixels) | | | (target pixel) | (peripheral pixels) | | |

The color code pattern shown as the example is as follows.

| | | | | | | |
|---|---|---|---|---|---|---|
| white: | white: | white: | an intermediate color : | a chromatic color : | black: | black: |
| 00 : | 00 : | 00 : | 01 : | 10 : | 11 : | 11 : |

The address can be expressed as follows, wherein the above-described pattern is used.

006F (16 digit)

The data to convert the target pixel from an intermediate color into black is stored in the address. The data to convert the target pixel from an intermediate color into a chromatic color is also stored in the address. The data to convert the target pixel from a chromatic color into black is also stored in the address. Accordingly, when all the patterns of 1 x 7 are stored as the address and the data to direct whether the target pixel is converted or not, are stored in the memory, LUT used to correct color ghosting can be completed.

Actually, in the case of the pattern 1 x 7, 14-bit address lines are needed and it is necessary to provide a bipolar ROM which has a capacity of 14-bit input for the address and 2-bit output for the color code. However, a high speed ROM with such a large capacity has not yet come into the market and is expensive.

When a high speed ROM with a large capacity is obtainable, the color pattern data can be stored in the same ROM. It is possible to use 4 ROMs and conduct LUT by selecting one of them according to the color of the leading pixel.

For instance, MB 7143/7144 manufactured by Fujitsu Co. may be used as a high speed bipolar ROM with a large capacity.

When a low speed ROM with a large capacity is used, it is possible to transmit the data to a plurality of SRAMs before the operation and to correct color ghosting with these SRAMs.

Fig. 14 is a block diagram which shows one of the examples of the color ghost correction circuit 7 and its peripheral units. Color ghost correction is conducted in the main scanning direction (the horizontal direction) and the sub-scanning direction (the vertical direction).

In this example, the color ghosting in the horizontal and vertical directions is eliminated by utilizing 7 pixels in the horizontal direction and 7 lines of image data in the vertical direction.

Color ghost correction is applied to the color codes in the image data.

For that reason, the color code which is read out from the color correction ROM, is supplied to the shift register 77 with 7-bit composition and made parallel so that the ghosting in the main scanning direction can be corrected. The parallel color code data which amounts to 7 pixel data is supplied to the ROM 78 which is used for detecting the color ghosting in the vertical direction. Then, detection, processing, and modification of color ghosting are conducted, wherein modification is conducted as follows. (an intermediate color --> a chromatic color or an achromatic color)

ROM 78 is used in the manner described above.

The serialized color code data is supplied to the line memory 79.

The function of the line memory 79 is to eliminate vertical color ghosting using 7 lines of image data. The registers 80a to 80g are provided corresponding to the line memories 79a to 79g.

The color code data of 7 line memories which has been through the process of coincidence in the memory 79, is supplied to ROM 81 in the next stage to eliminate the vertical ghosting, and impressed on the gate 9 after the vertical color ghosting has been detected.

The density data which is inputted to the selector 6 is either Y, M, C, or K corresponding to the recording color signal (the scanning code). When the density data is either Y, M, or C, the density data is outputted from the gate 10 only when the color code outputted from ROM 81 is the color code of a chromatic color. When the recording signal is K, the density data of K is outputted from the gate 10 only when the color code is that of an achromatic color.

In this example, the following effect can be achieved: not only the color ghosting of a chromatic color which appears on the edge of black letters but also the color ghosting of an achromatic color which appears on the edge of letters of a chromatic color, can be corrected. As the color code of an intermediate color is used apart from the color codes of a chromatic color and an achromatic color, color ghost correction can be precisely conducted. Accordingly, the accuracy of color ghost correction can be improved without degrading the gradation characteristics of a color gradation picture.

In the printer unit 12, an image is formed in accordance with a document, wherein the density signal is used which has been through the filtering process, gradation correction, and the enlarging/reducing process.

In this example, the color codes are separated into the codes of a chromatic color, black, white, and an intermediate color, and the color code of an intermediate color is modified to the color code of black or a chromatic color. Accordingly, the reproducibility of a color of low chroma can be improved and the accuracy of color ghost correction can be also improved.

(Effect of the invention)

As explained above, in the present invention, when colors are separated into a chromatic color and an achromatic color, the intermediate color region is set. When color ghost correction is conducted, this intermediate color region is modified to a chromatic color or an achromatic color. Accordingly, a color image processing apparatus can be realized which can improve the reproducibility of a color of low chroma in a color gradation picture and reduce color ghosting in a black lettered text.

**Claims**

1. Image processing apparatus in which color image data are obtained in form of pixels from an original image by an image reading means, the image processing apparatus comprises first classifying means (2) for classifiying the color of each pixel as one of chromatic color, achromatic color, and an intermediate color on the basis of said color image data, said intermediate color being a color in the color region between said chromatic color and said achromatic color,

    means (4) for selecting between a black letter text mode and a color gradation drawing mode, and
    second classifying means (5) for further classifying the color of pixels classified as said intermediate color as either said chromatic color or said achromatic color on the basis of said mode, wherein said second classifying means classifies the color of pixels classified as said intermediate color as said achromatic color when said selecting means (4) select the black letter text mode, and said second classifying means classifies the color of pixels classified as said intermediate color as said chromatic color when said selecting means (4) select the color gradation drawing mode.

2. Apparatus of claim 1, characterized in that said selecting means (4) further comprises means for discriminating said original image between a color gradation drawing and a black color letter on the basis of said color image data, wherein said selecting means select said black letter text mode when said discriminating means discriminates said original image as a black letter text, and said selecting means select said color gradation drawing mode when said discriminating means discriminates said original image as the color gradation drawing.

3. Apparatus of claim 1, characterized in that said selecting means (4) further comprises setting means for setting the color gradation drawing mode and the black letter text mode from the outside of the apparatus, for instance from an operation unit, said selecting means selects corresponding mode on the basis of the input of said setting means.

4. Apparatus of claim 2, characterized in that the image reading means (1) generates a plurality of color component signals of each pixel, each of said color component signals representing a density level of a corresponding component color, said discriminating means discriminates by a detection of a change in density level between pixels on the basis of the density levels of the color component signals.

5. Apparatus of claim 4, characterized in that said reading means (1) includes means for generating red, green, and blue color component signals as the plurality of color component signals.

6. Apparatus of claim 4 or 5, characterized in that said discriminating means includes means for detecting a change in density level on the basis of the density level of one of said red, green, and blue color component signals.

7. Apparatus of claim 4 or 5, characterized in that said discriminating means includes means for detecting a change in density level on the basis of the density level of said green color component signal.

8. Apparatus of claim 1, characterized in that it further comprises processing means for processing said color image data, wherein said processing means performs an image processing for said achromatic color different from that for chromatic color.

9. Apparatus of claim 8, characterized in that said processing means includes a filter (8).

**10.** Apparatus of claim 8, characterized in that said processing means includes a gradation correction (9).

**11.** Apparatus of claim 9, characterized in that said filter (8) includes a MTF correcting correction.

**12.** Apparatus of claim 9, characterized in that said filter (8) performs a smoothing processing.

**Revendications**

**1.** Appareil de traitement d'images dans lequel des données d'images en couleur sont obtenues par un moyen de lecture d'images sous forme de pixels à partir d'un original, ledit appareil de traitement d'images comprenant un premier moyen de classification (2) pour classifier sur la base des données d'images de couleur obtenues la couleur de chacun des pixels comme étant une couleur chromatique, une couleur achromatique et une couleur intermédiare, ladite couleur intermédiare étant une couleur se trouvant dans la gamme des couleurs situées entre ladite couleur chromatique et ladite couleur achromatique, ledit appareil comprenant en outre des moyens de sélection (4) permettant de choisir entre un mode de représentation de caractères noires et un mode de représentation graphique de graduation des couleurs, l'appareil comprenant en plus un deuxième moyen de classification (5) pour classifier sur la base du mode de représentation choisi la couleur des pixels classifiée comme ladite couleur intermédiare comme étant ou bien la couleur chromatique ou bien la couleur achromatique, et dans lequel ledit deuxième moyen de classification classifie la couleur des pixels classifiée comme étant la couleur intermédiaire lorsque ledit moyen de sélection (4) choisit le mode de représentaion à caractères noires, et dans lequel ledit deuxième moyen de classification classifie la couleur des pixels classifiée comme ladite couleur intermédiare comme étant ladite couleur achromatique lorsque ledit moyen de sélection (4) choisit le mode de représentation graphique de graduation des couleurs.

**2.** Appareil suivant la revendication 1,
**caractérisé en ce que**
ledit moyen de sélection (4) comprend en outre des moyens pour distinguer sur la base des données d'images obtenues ladite image originale entre le mode de représentation graphique de graduation des couleurs et le mode de représentation à caractères noires, et en ce que ledit moyen de sélection choisit le mode de représentation de caractères noires lorsque ledit moyen de discrimination distingue ladite image originale comme représentant un texte à caractères noires, et en ce que ledit moyen de sélection choisit le mode de représentation graphique de graduation des couleurs lorsque ledit moyen de discrimination distingue l'image originale comme représentant le mode de représentation graphique de graduation des couleurs.

**3.** Appareil suivant la revendication 1,
**caractérisé en ce que**
ledit moyen de sélection (4) comprend par ailleurs des moyens de réglage pour régler à partir de l'extérieur de l'appareil, par exemple à l'aide d'une unité de commande, le mode de représentation graphique de graduation des couleurs et le mode de texte à caractères noires, et en ce que ledit moyen de sélection choisit le mode correspondant sur la base des données d'entrée dudit moyen de réglage.

**4.** Appareil suivant la revendication 2,
**caractérisé en ce que**
ledit appareil de traitement d'images (1) génère une multiplicité de signaux relatifs aux composantes des couleurs de chacun des pixels, et en ce que chacun desdits signaux des composantes de couleur représente un niveau de densité d'une composante de couleur correspondante, et en ce que ledit moyen de discrimination distingue un changement détecté du niveau de densité entre les pixels sur la base des niveaux de densité des signaux des composantes de couleurs.

**5.** Appareil suivant la revendication 4,
**caractérisé en ce que**
ledit moyen de lecture (1) comprend des moyens pour la génération de signaux relatifs aux composantes de couleur rouge, verte et bleue comme représentant la multiplicité des signaux de composantes de couleur.

**6.** Appareil suivant l'une des revendications 4 ou 5,
**caractérisé en ce que**
ledit moyen de discrimination comprend des moyens pour détecter un changement du niveau de densité sur la base des niveaux de densité de l'un des signaux relatifs aux composantes des couleurs rouge, verte et bleue.

7. Appareil suivant l'une des revendications 4 ou 5,
**caractérisé en ce que**
ledit moyen de discrimination comprend des moyens pour détecter un changement du niveau de densité sur la base du niveau de densité dudit signal relatif à la composante de couleur verte.

8. Appareil suivant la revendication 1,
**caractérisé en ce que**
il comprend en outre des moyens de traitement pour traiter lesdites données d'image de couleur, et en ce que ledit moyen de traitement effectue un traitement d'image pour ladite couleur achromatique qui diffère de celui effectué pour la couleur chromatique.

9. Appareil suivant la revendication 8,
**caractérisé en ce que**
ledit moyen de traitement comprend un filtre (8).

10. Appareil suivant la revendication 8,
**caractérisé en ce que**
ledit moyen de traitement est équipé de moyens de correction de la graduation.

11. Appareil suivant la revendication 8,
caractérisé en ce que
ledit filtre (8) est équipé d'un moyen de correction corrigeant la fonction de transfer de modulation.

12. Appareil suivant la revendication 9,
caractérisé en ce que
ledit filtre (8) effectue un traitement de lissage.

**Patentansprüche**

1. Gerät für die Farbbildverarbeitung, bei dem mit Hilfe eines Bildlesegerätes Farbbilddaten aus einem Originalbild in Form von Pixeln herausgelesen werden und dieses Gerät für die Bildverarbeitung ein erstes Diskriminierungsmittel (2) enthält, um auf der Grundlage dieser Farbbilddaten die Farbe der jeweiligen Pixel als chromatische Farbe, achromatische Farbe und eine dazwischenliegende Farbe zu unterscheiden, wobei diese dazwischenliegende Farbe eine Farbe ist, welche im Farbbereich zwischen der chromatischen Farbe und der achromatischen Farbe angesiedelt ist, und das ebenfalls Wählvorrichtungen (4) für die Auswahl zwischen einem Textmodus mit schwarzen Buchstaben und einem farbigen Graphikmodus aufweist, und das außerdem zweite Diskriminierungsmittel (5) enthält, um weiterhin auf der Grundlage dieses Modus die als Zwischenfarbe eingestufte Farbe der Pixel entweder als die chromatische Farbe oder die achromatische Farbe zu erkennen, wobei dieses zweite Diskriminierungsmittel die als Zwischenfarbe eingestufte Farbe der Pixel dann als achromatische Farbe einstuft, wenn die Wählvorrichtung (4) den Textmodus mit schwarzen Buchstaben auswählt, und daß dieses zweite Diskriminierungsmittel die als Zwischenfarbe eingestufte Farbe der Pixel dann als chromatische Farbe einstuft, wenn die Wählvorrichtung (4) den farbigen Graphikmodus ausgewählt hat.

2. Gerät für die Farbbildverarbeitung nach Anspruch 1,
**dadurch gekennzeichnet, daß**
die Wählvorrichtung (4) außerdem Mittel aufweist, um auf der Grundlage der Farbbilddaten des Originalbildes zwischen einem farbigen Graphikmodus und einem Textmodus mit schwarzen Buchstaben zu unterscheiden, wobei die Wählvorrichtung den Textmodus mit schwarzen Buchstaben dann auswählt, wenn die Diskriminierungsmittel das Originalbild als einen Textmodus mit schwarzen Buchstaben erkennen, und daß die Wählvorrichtung den farbigen Graphikmodus dann auswählt, wenn diese Diskriminierungsmittel das Originalbild als den farbigen Graphikmodus erkennen.

3. Gerät für die Farbbildverarbeitung nach Anspruch 1,
**dadurch gekennzeichnet, daß**
die Wählvorrichtung (4) außerdem Stellmittel für die Einstellung des farbigen Graphikmodus und des Textmodus mit schwarzen Buchstaben von der Außenseite des Gerätes, zum Beispiel in Form einer Betätigungseinheit aufweist, so daß die Wählvorrichtung den entsprechenden Modus auf der Grundlage der Eingabe des Stellmittels auswählt.

**4.** Gerät für die Farbbildverarbeitung nach Anspruch 2,
**dadurch gekennzeichnet, daß**
das Bildlesegerät (1) eine Vielzahl von Signalen für die Farbkomponenten der einzelnen Pixel erzeugt, und daß jedes der Farbkomponentensignale einen Dichtewert für eine entsprechende Farbkomponente darstellt, und daß das Diskriminierungsmittel Veränderungen der Dichte der einzelnen Pixel auf der Grundlage der Dichten der anderen Farbkomponentensignale feststellt.

**5.** Gerät für die Farbbildverarbeitung nach Anspruch 4,
**dadurch gekennzeichnet, daß**
das Bildlesegerät (1) Mittel für die Erzeugung von Signalen für rote, grüne und blaue Farbkomponenten als eine Vielzahl von Farbkomponentensignalen aufweist.

**6.** Gerät für die Farbbildverarbeitung nach einem der Ansprüche 4 oder 5,
**dadurch gekennzeichnet, daß**
die Diskriminierungsmittel Mittel aufweisen, um eine Veränderung der Dichte auf der Grundlage der Dichte eines der Signale für rote, grüne und blaue Farbkomponenten festzustellen.

**7.** Gerät für die Farbbildverarbeitung nach einem der Ansprüche 4 oder 5,
**dadurch gekennzeichnet, daß**
die Diskriminierungsmittel Mittel aufweisen, um eine Veränderung der Dichte auf der Grundlage der Dichte des Signals für die grüne Farbkomponente festzustellen.

**8.** Gerät für die Farbbildverarbeitung nach Anspruch 1,
**dadurch gekennzeichnet, daß**
ein Verarbeitungsmittel für die Verarbeitung der Farbbilddaten vorgesehen ist, und daß diese Verarbeitungsmittel für die achromatische Farbe eine Bildverarbeitung durchführen, die anders ist, als die Bildverarbeitung der chromatischen Farbe.

**9.** Gerät für die Farbbildverarbeitung nach Anspruch 8,
**dadurch gekennzeichnet, daß**
das Verarbeitungsmittel einen Filter (8) aufweist.

**10.** Gerät für die Farbbildverarbeitung nach Anspruch 8,
**dadurch gekennzeichnet, daß**
das Verarbeitungsmittel ein Mittel (9) für die Korrektur der Graduierung aufweist.

**11.** Gerät für die Farbbildverarbeitung nach Anspruch 9,
**dadurch gekennzeichnet, daß**
der Filter (8) ein Mittel für die MTF-Korrektur enthält.

**12.** Gerät für die Farbbildverarbeitung nach Anspruch 9,
**dadurch gekennzeichnet, daß**
der Filter (8) eine Glättungsbearbeitung durchführt.

FIG. 1

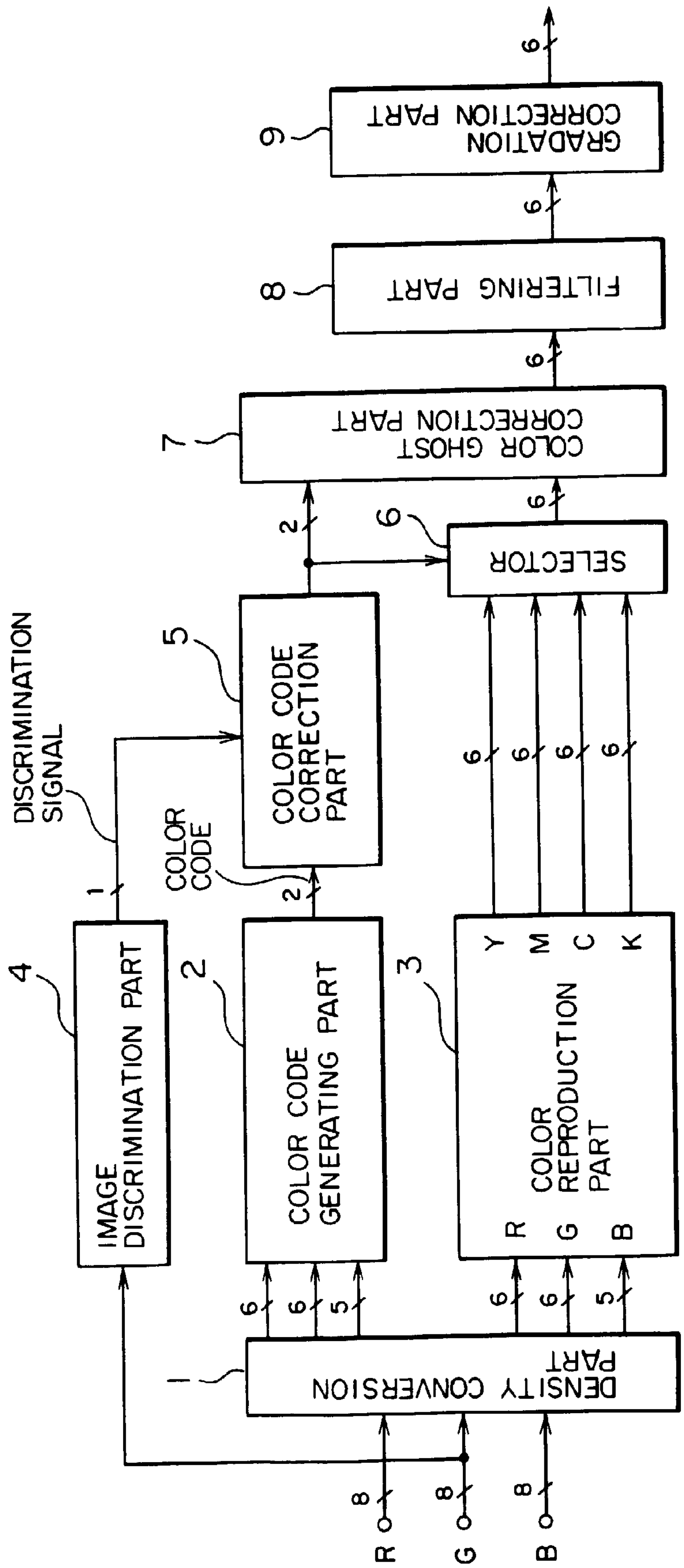
DENSITY CONVERSION PART
IMAGE DISCRIMINATION PART
COLOR CODE GENERATING PART
COLOR REPRODUCTION PART
DISCRIMINATION SIGNAL
COLOR CODE
COLOR CODE CORRECTION PART
SELECTOR
COLOR GHOST CORRECTION PART
FILTERING PART
GRADATION CORRECTION PART
R
G
B
Y
M
C
K
1
2
3
4
5
6
7
8
9

FIG. 2

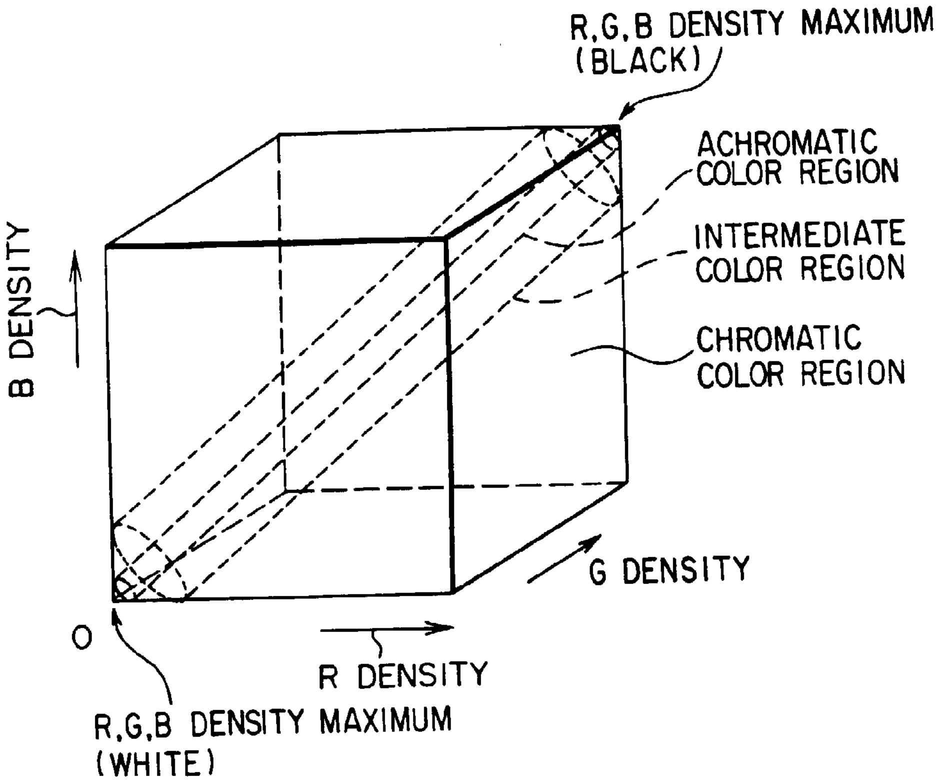
R,G,B DENSITY MAXIMUM
(BLACK)
ACHROMATIC
COLOR REGION
INTERMEDIATE
COLOR REGION
CHROMATIC
COLOR REGION
B DENSITY
G DENSITY
O
R DENSITY
R,G,B DENSITY MAXIMUM
(WHITE)

FIG. 3

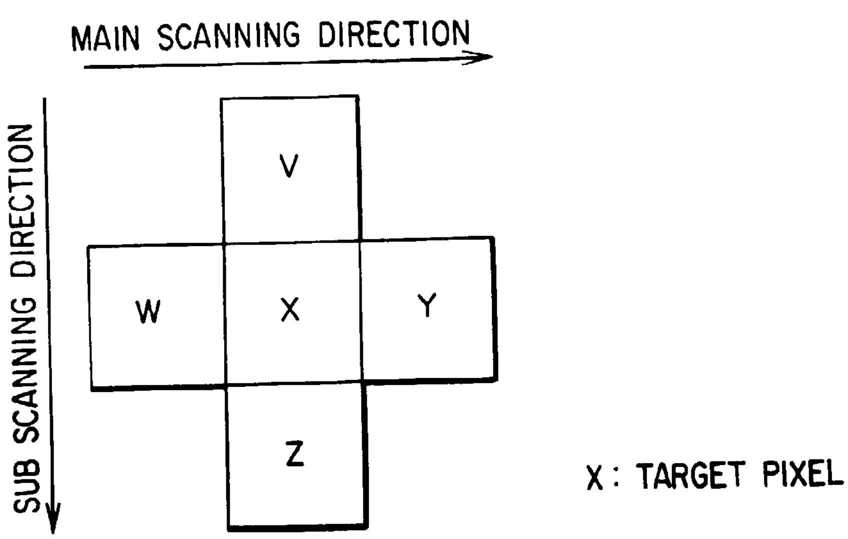
MAIN SCANNING DIRECTION
SUB SCANNING DIRECTION
V
W
X
Y
Z
X : TARGET PIXEL

FIG. 4

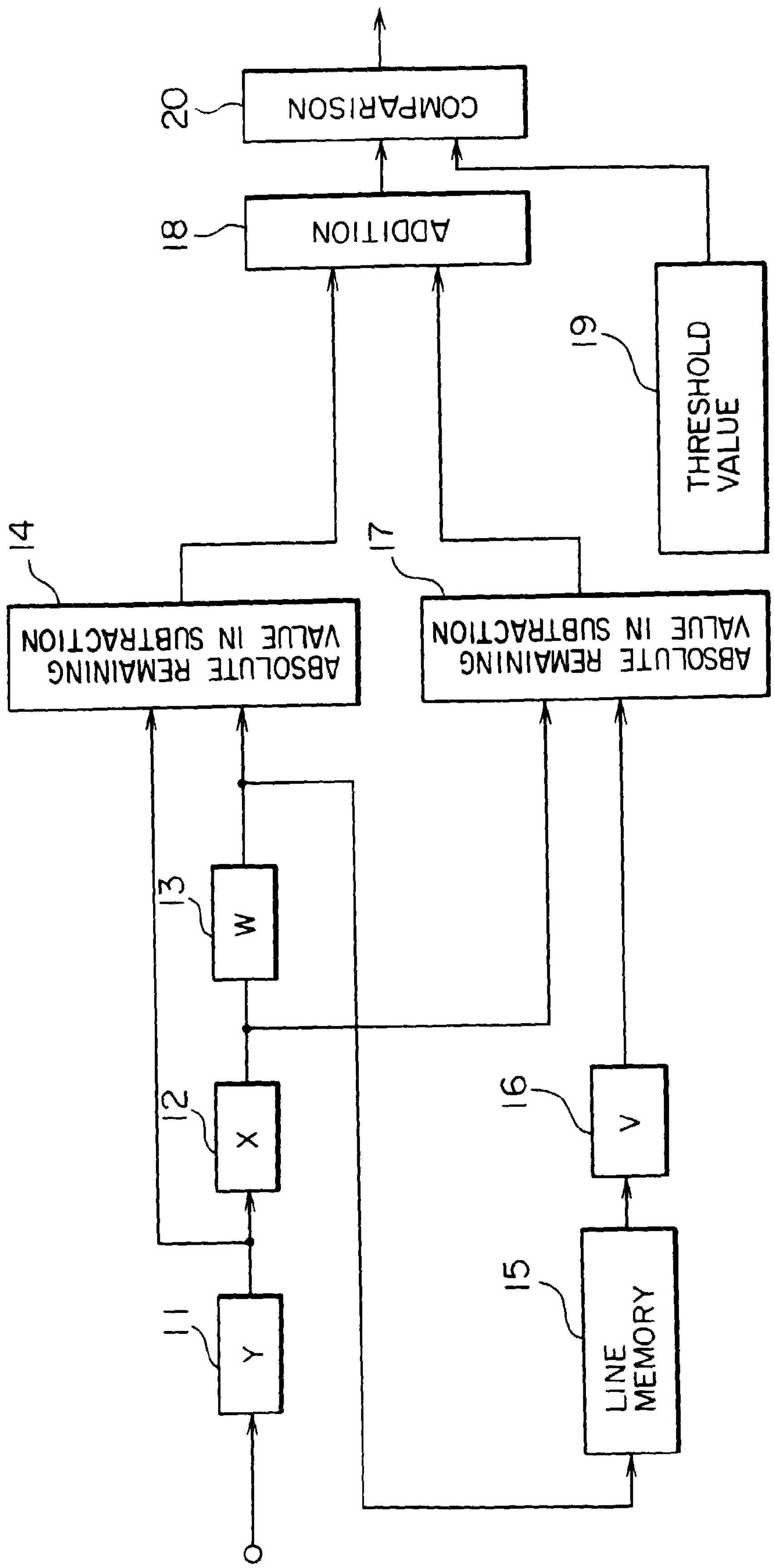

20
COMPARISON
18
ADDITION
19
THRESHOLD VALUE
14
ABSOLUTE REMAINING VALUE IN SUBTRACTION
17
ABSOLUTE REMAINING VALUE IN SUBTRACTION
13
W
12
X
11
Y
16
V
15
LINE MEMORY

FIG. 5

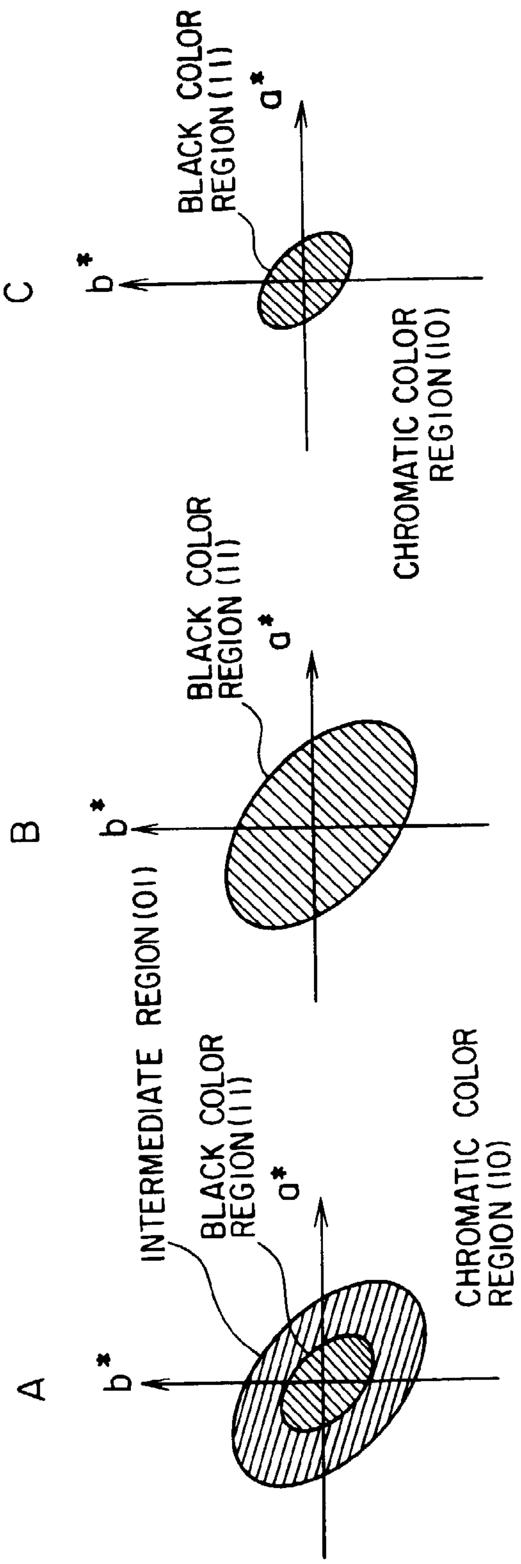
A
b*
a*
INTERMEDIATE REGION(01)
BLACK COLOR REGION(11)
CHROMATIC COLOR REGION(10)
B
b*
a*
BLACK COLOR REGION(11)
C
b*
a*
BLACK COLOR REGION(11)
CHROMATIC COLOR REGION(10)

# FIG. 6

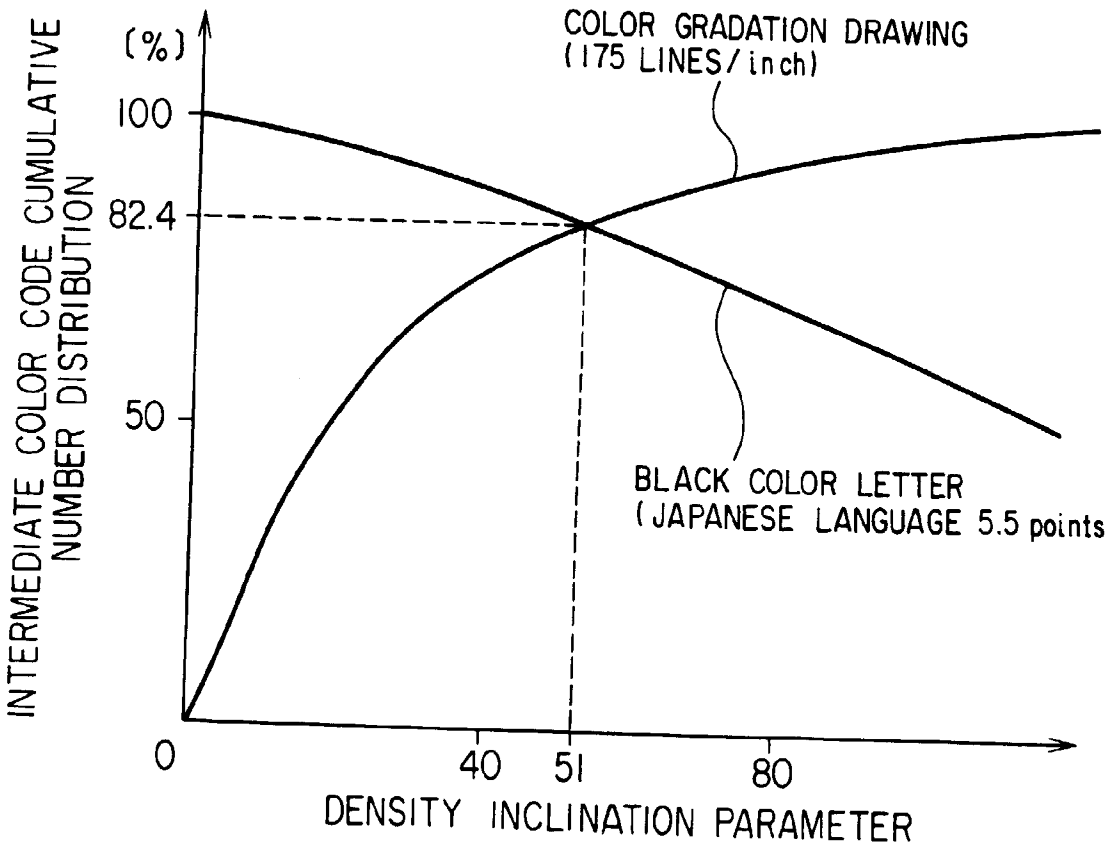
INTERMEDIATE COLOR CODE CUMULATIVE NUMBER DISTRIBUTION
(%)
100
82.4
50
0
40
51
80
DENSITY INCLINATION PARAMETER
COLOR GRADATION DRAWING
(175 LINES/inch)
BLACK COLOR LETTER
(JAPANESE LANGUAGE 5.5 points

FIG. 7

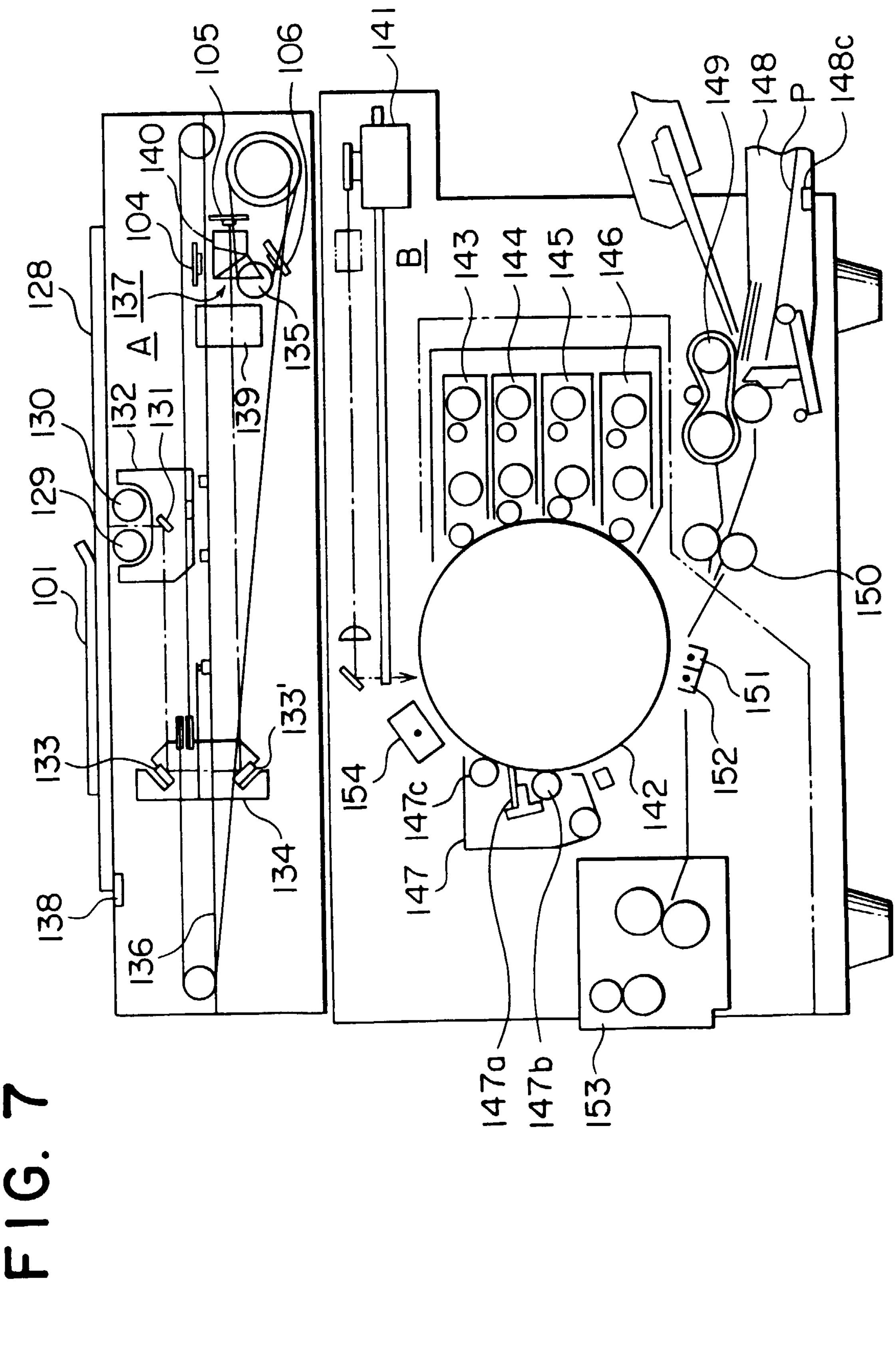
101
104
105
106
128
129
130
131
132
133
133'
134
135
136
137
138
139
140
A
B
141
142
143
144
145
146
147
147a
147b
147c
148
148c
149
150
151
152
153
154
P

FIG. 8

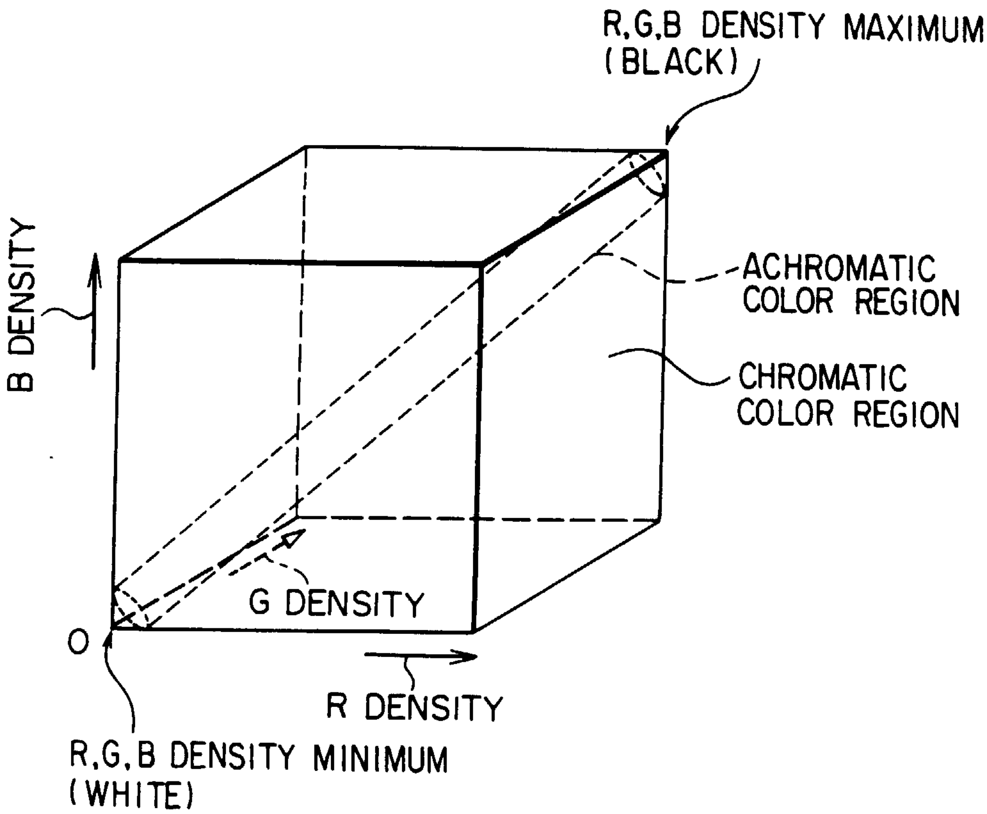
R,G,B DENSITY MAXIMUM
(BLACK)
B DENSITY
ACHROMATIC
COLOR REGION
CHROMATIC
COLOR REGION
G DENSITY
O
R DENSITY
R,G,B DENSITY MINIMUM
(WHITE)

FIG. 9

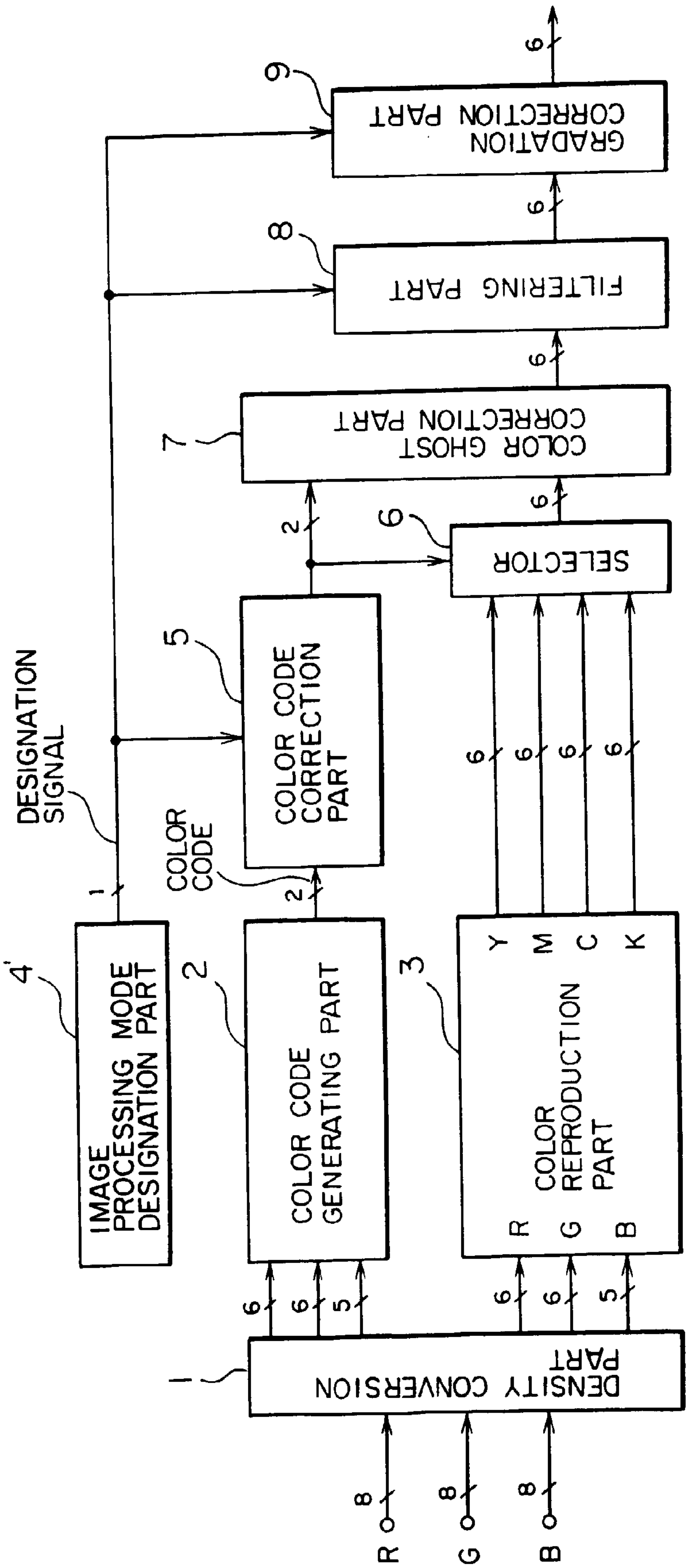
R
G
B
8
DENSITY CONVERSION PART
1
IMAGE PROCESSING MODE DESIGNATION PART
4'
COLOR CODE GENERATING PART
2
COLOR REPRODUCTION PART
3
Y
M
C
K
COLOR CODE
DESIGNATION SIGNAL
COLOR CODE CORRECTION PART
5
SELECTOR
6
COLOR GHOST CORRECTION PART
7
FILTERING PART
8
GRADATION CORRECTION PART
9

# FIG. 10

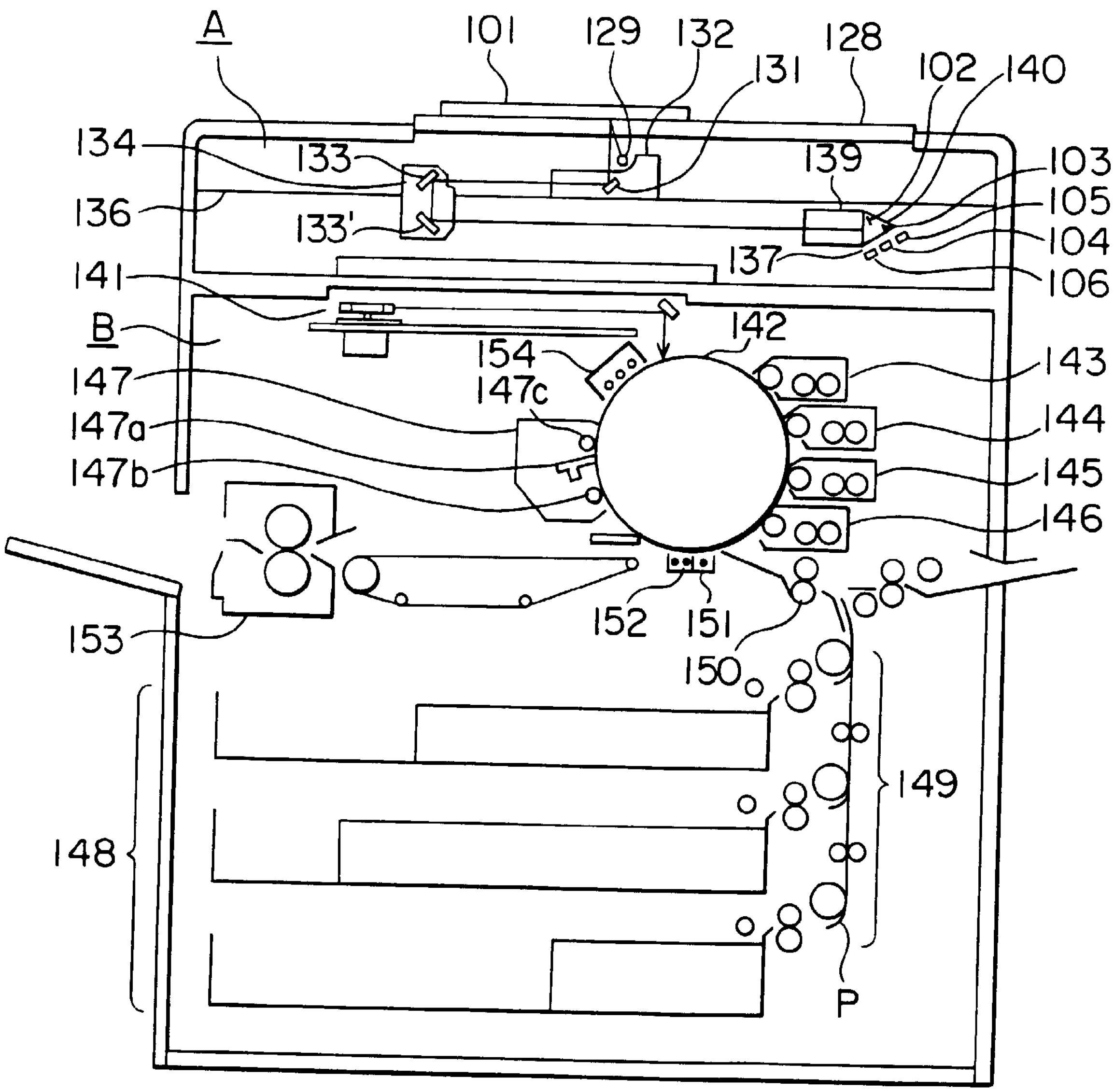
A
101
129
132
131
128
102
140
134
133
139
103
136
105
133'
104
137
106
141
B
142
154
143
147
147c
144
147a
145
147b
146
153
152
151
150
149
148
P

FIG. 11

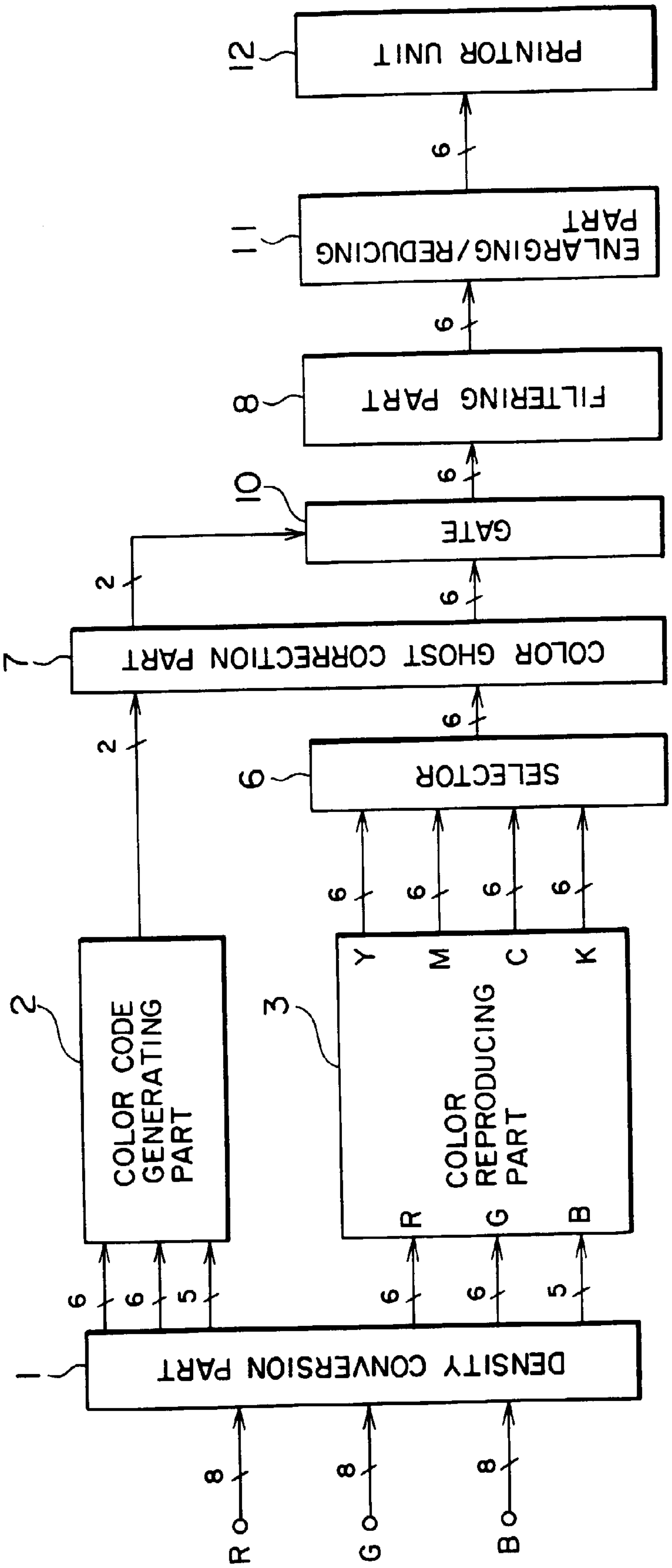
R
G
B
8
DENSITY CONVERSION PART
1
COLOR CODE GENERATING PART
2
COLOR REPRODUCING PART
3
R
G
B
Y
M
C
K
SELECTOR
6
COLOR GHOST CORRECTION PART
7
GATE
10
FILTERING PART
8
ENLARGING/REDUCING PART
11
PRINTOR UNIT
12

# FIG. 12

| NUMBER | COLOR PATTERN | CHANGE IN TARGET PIXEL |
|---|---|---|
| 1 | W W W I C B B | I → B |
| 2 | W W C I C B W | I → C |

PERIPHERY PIXEL

TARGET PIXEL

PERIPHERY PIXEL

I : INTERMEDIATE COLOR
W : WHITE
B : BLACK, GRAY
C : CHROMATIC

# FIG. 13

| N | M | NUMBER OF COLOR PATTERS | PATTERN SIZE |
|---|---|---|---|
| 2 | 3 | 8 | 1 × 3 |
| | 5 | 32 | 1 × 5 |
| | 7 | 128 | 1 × 7 |
| 3 | 3 | 27 | 1 × 3 |
| | 5 | 243 | 1 × 5 |
| | 7 | 2187 | 1 × 7 |
| 4 | 3 | 64 | 1 × 3 |
| | 5 | 1024 | 1 × 5 |
| | 7 | 16384 | 1 × 7 |
| | 9 | 262144 | 3 × 3 , 1 × 9 |

FIG. 14

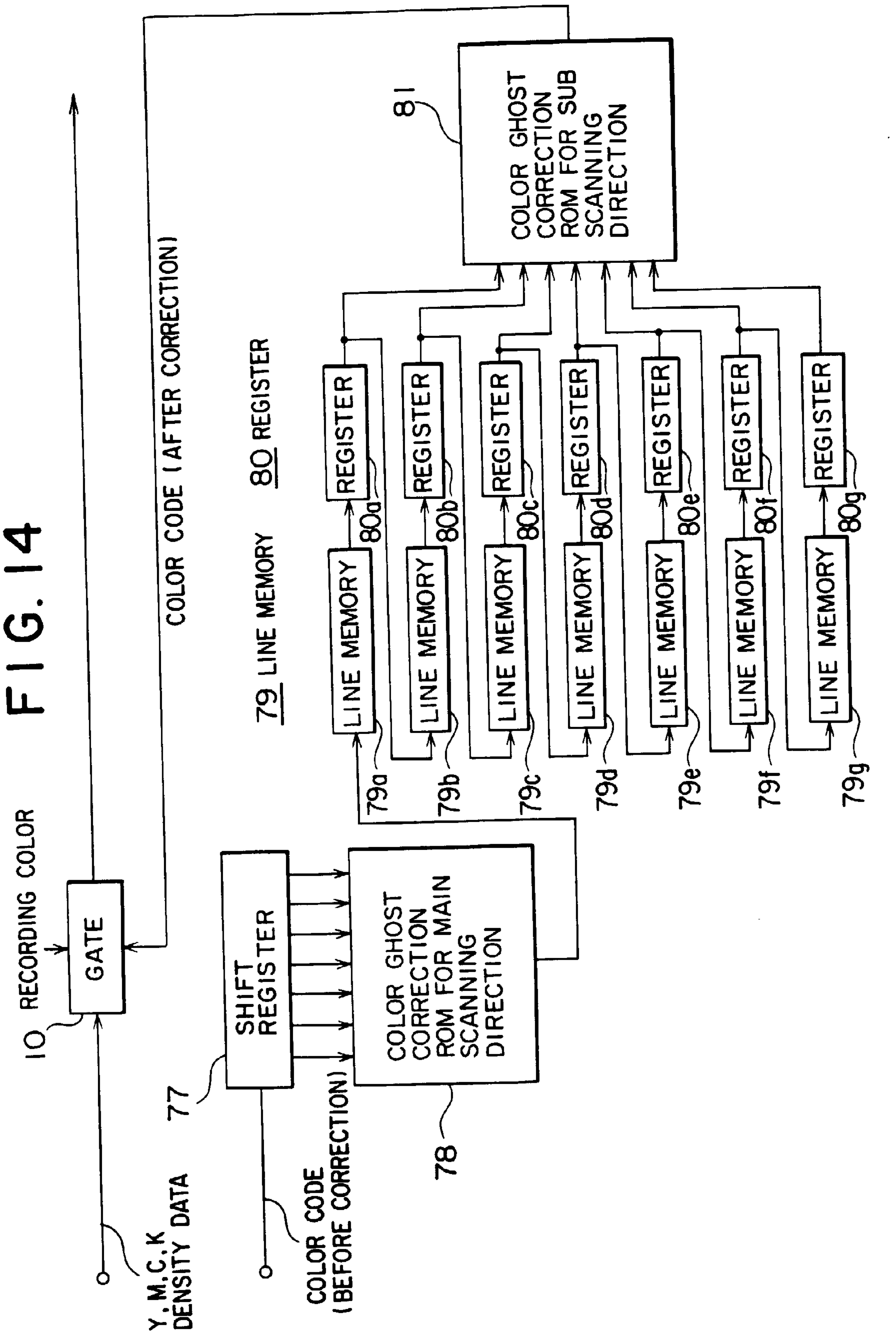
10
RECORDING COLOR
GATE
Y, M, C, K DENSITY DATA
COLOR CODE (AFTER CORRECTION)
77
SHIFT REGISTER
COLOR CODE (BEFORE CORRECTION)
78
COLOR GHOST CORRECTION ROM FOR MAIN SCANNING DIRECTION
79 LINE MEMORY
80 REGISTER
79a
79b
79c
79d
79e
79f
79g
LINE MEMORY
REGISTER
80a
80b
80c
80d
80e
80f
80g
81
COLOR GHOST CORRECTION ROM FOR SUB SCANNING DIRECTION